# EUROPÄISCHE PATENTANMELDUNG

(11) **EP 0 917 275 A1**
(43) Veröffentlichungstag der Anmeldung: **19.05.1999**
(21) Anmeldenummer: 98890329.0
(22) Anmeldetag: 10.11.1998
(51) Int. Cl.: H02K 5/18

(54) **Statorgehäuse für Elektromotoren**

(30) Priorität: 18.11.1997 AT 1955/97; 10.03.1998 AT 420/98
(71) Anmelder: ATB Austria Antriebstechnik Aktiengesellschaft, 8724 Spielberg (Steiermark) (AT)
(72) Erfinder: Sommer, Rudolf, 8715 St. Lorenzen (AT)
(74) Vertreter: Beer, Manfred, Dipl.-Ing.

(57) **Zusammenfassung**

Um unerwünschte Vibrationen von Elektromotoren zu vermeiden, sind wenigstens einige der vom Statorgehäuse (1) abstehenden Kühlrippen (6) so ausgebildet, daß ihre Höhe wenigstens über einen Teil der Länge der Kühlrippen (6) zu einem Ende hin abnimmt. Gegebenenfalls können die sich verjüngenden Kühlrippen (6) dicker als andere Kühlrippen (5) sein.

## Beschreibung

Die Erfindung betrifft ein Statorgehäuse für Elektromotoren, an dem außen von Statorgehäuse abstehende Kühlrippen vorgesehen sind.

Es hat sich gezeigt, daß beim Betrieb von Elektromotoren, an deren Statorgehäuse außen Kühlrippen vorgesehen sind, um die Kühlwirkung des vom Lüfterrad erzeugten Luftstromes zu verbessern, oft störende Schwingungen auftreten.

Der Erfindung liegt die Aufgabe zugrunde, das Auftreten der beschriebenen, störenden Schwingungen und die sich daraus ergebende Geräuschentwicklung zu vermindern.

Erfindungsgemäß wird diese Aufgabe mit einem Statorgehäuse mit den Merkmalen des Anspruches 1 gelöst.

Vorteilhafte und bevorzugte Ausführungsformen des erfindungsgemäßen Statorgehäuses sind Gegenstand der Unteransprüche.

Überraschend hat sich gezeigt, daß die sich verjüngende Ausbildung von Kühlrippen das Auftreten von Schwingungen und die damit verbundene Geräuschentwicklung verringert und bei richtiger Wahl der Verjüngung zur Gänze beseitigt.

Weitere Einzelheiten, Merkmale und Vorteile des erfindungsgemäßen Statorgehäuses ergeben sich aus der nachstehenden Beschreibung eines Ausführungsbeispieles anhand der Zeichnungen.

Es zeigt:
Fig. 1 in Schrägansicht ein Statorgehäuse eines Elektromotors und
Fig. 2 in Draufsicht das Statorgehäuse von Fig. 1.

An einem Statorgehäuse 1 eines im übrigen nicht gezeigten Elektromotors sind außen mehrere Kühlrippen 5 und 6 vorgesehen, die vom Statorgehäuse 1 etwa radial nach außen abstehen und in durch die Achse des Statorgehäuses gehenden Ebenen liegen.

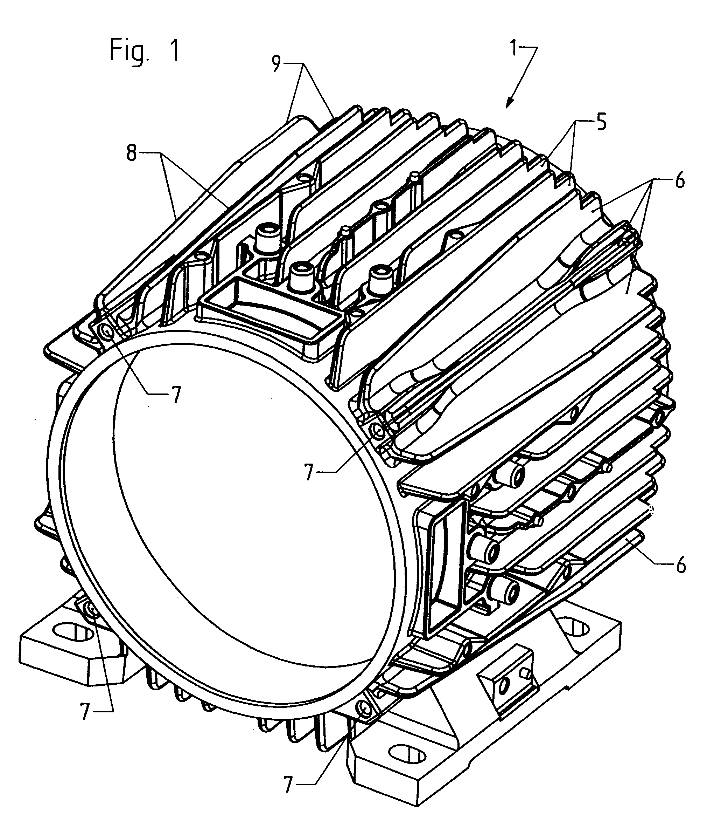

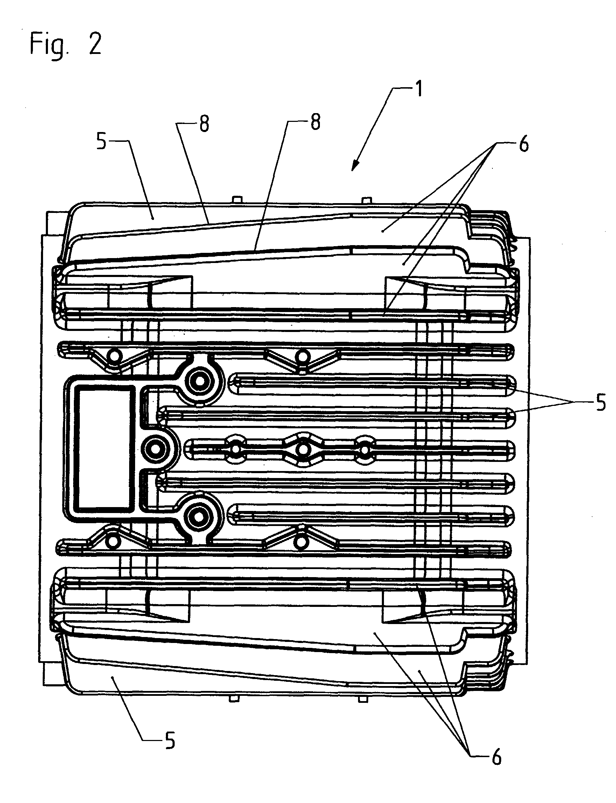

Im gezeigten Ausführungsbeispiel sind die Kühlrippen 6 sich von der B-Seite (Belüftungsseite, rechts in Fig. 1 und 2) zur A-Seite (Abtriebsseite, links in Fig. 1 und 2) des Statorgehäuses 1 hin verjüngend ausgebildet, d.h. die Höhe der Kühlrippen 6 nimmt wenigstens über einen Teil ihrer Länge von der B-Seite zur A-Seite hin ab.

Es ist bevorzugt so ausgebildet, daß die Kühlrippen 6 in dem Bereich, in dem das Statorpaket innerhalb des Statorgehäuses 1 angeordnet ist (rechts in Fig. 1 und 2), zur Achse des Statorgehäuses 1 parallele, freie Ränder 8 besitzen und nur über den Teil ihrer Länge sich verjüngend ausgebildet sind, also mit der Achse des Statorgehäuses 1 spitze Winkel einschließende freie Ränder 8 aufweisen. Dabei kann sich der Bereich, in dem sich die Kühlrippen 6 verjüngen (also niedriger werden), bis in dem Bereich der Länge des Statorgehäuses 1 erstrecken, in dem innerhalb des Statorgehäuses 1 das Statorpaket angeordnet ist.

Im gezeigten Ausführungsbeispiel sind die drei Kühlrippen 6 sich verjüngend ausgebildet, die im Bereich der (vier) Sacklöcher 7 für die Befestigungsschrauben angeordnet sind, über welche die Lagerschilde (nicht gezeigt) am Statorgehäuse 1 befestigt werden.

Zusätzlich können die sich verjüngenden, also abgeschrägte, zur Achse des Elektromotors 7 bzw. Statorgehäuses 1 geneigt verlaufende freie Ränder 8 aufweisenden Kühlrippen 6 dicker ausgebildet sein, als sich nicht verjüngende Kühlrippen 5.

Völlig überraschend hat sich gezeigt, daß bei einem Elektromotor, an dessen Statorgehäuse 1 einzelne Kühlrippen 6 sich verjüngend ausgebildet und gegebenenfalls dicker sind als andere, sich nicht verjüngende Kühlrippen 5, die sonst oft auftretenden störenden Vibrationen wenigstens stark verringert, wenn nicht ganz unterdrückt sind, so daß die vibrationsbedingte Geräuschentwicklung wenigstens stark verringert wird.

Zusammenfassend kann ein Ausführungsbeispiel der Erfindung wie folgt dargestellt werden:

Um unerwünschte Vibrationen von Elektromotoren zu vermeiden, sind wenigstens einige der vom Statorgehäuse 1 abstehenden Kühlrippen 6 so ausgebildet, daß ihre Höhe wenigstens über einen Teil der Länge der Kühlrippen 6 zu einem Ende hin abnimmt. Gegebenenfalls können die sich verjüngenden Kühlrippen 6 dicker als andere Kühlrippen 5 sein.

## Patentansprüche

1. Statorgehäuse (1) für Elektromotoren, an dem sich in Achsrichtung erstreckende Kühlrippen (5, 6) vom Statorgehäuse (1) nach außen abstehend vorgesehen sind, dadurch gekennzeichnet, daß einzelne Kühlrippen (6) wenigstens über einen Teil ihrer Länge sich verjüngend ausgebildet sind.

2. Statorgehäuse nach Anspruch 1, dadurch gekennzeichnet, daß Kühlrippen (6) vorgesehen sind, die sich von der Seite des Elektromotors, an dem das Lüfterrad vorgesehen ist, zur Abtriebsseite des Elektromotors hin verjüngen.

3. Statorgehäuse nach Anspruch 1 oder 2, dadurch gekennzeichnet, daß jede sich verjüngende Kühlrippe (6), insbesondere in dem Bereich, in dem im Statorgehäuse (1) das Statorblechpaket aufgenommen ist, freie Ränder (9) aufweisen, die zur Achse des Statorgehäuses (1) im wesentlichen parallel ausgerichtet sind.

4. Statorgehäuse nach einem der Ansprüche 1 bis 3,dadurch gekennzeichnet, daß die freien Ränder (8) der sich verjüngenden Abschnitte der Kühlrippen (6) mit der Achse des Statorgehäuses (1) einen spitzen Winkel einschließen.

5. Statorgehäuse nach einem der Ansprüche 1 bis 4, dadurch gekennzeichnet, daß sich verjüngende Kühlrippen (6) im Bereich von Aufnahmelöchern (7) für Lagerschilde am Statorgehäuse (1) festlegende Schrauben vorgesehen sind.

6. Statorgehäuse nach Anspruch 5, dadurch gekennzeichnet, daß im Bereich jedes Aufnahmeloches (7) je drei sich verjüngende Kühlrippen (6) vorgesehen sind.
